# EUROPEAN PATENT APPLICATION

(11) **EP 4 661 200 A1**
(43) Date of publication of application: **10.12.2025**
(21) Application number: 24852376.3
(22) Date of filing: 08.08.2024
(51) Int. Cl.: H01M 50/583, H01M 50/107, H01M 50/538, H01M 50/249, H01M 50/581

(54) **CURRENT COLLECTOR, BATTERY CELL, BATTERY PACK AND VEHICLE COMPRISING SAME**

(30) Priority: 08.08.2023 KR 20230103450; 05.08.2024 KR 20240103868
(71) Applicant: LG Energy Solution, Ltd., Seoul 07335 (KR)
(72) Inventor: LEE, So-Yeon, Daejeon 34122 (KR); LIM, Seong-Min, Daejeon 34122 (KR); KIM, Yong-Han, Daejeon 34122 (KR); LEE, Byoung-Gu, Daejeon 34122 (KR)
(74) Representative: Goddar, Heinz J.
(86) International application number: PCT/KR2024/011803
(87) International publication number: WO 2025/034023

(57) **Abstract**

A current collector according to the present disclosure may include: a first coupling portion coupled with a first terminal; a second coupling portion coupled with an electrode assembly; a plurality of bridge portions configured to connect the first coupling portion and the second coupling portion; and a plurality of fusing induction portions provided in the respective bridge portions and configured to cover at least a portion of the bridge portion.

## Description

### TECHNICAL FIELD

The present disclosure relates to a current collector, a battery cell, a battery pack, and a vehicle including the same, and more specifically, it relates to a current collector, a battery cell, and a battery pack including a fusing induction portion and capable of easily and accurately adjusting a position where fusing occurs, preventing the occurrence of foreign substances during fusing, and preventing reconnection of current after fusing, and a vehicle including the same.

This application is based on and claims priority from Korean Patent Application No. 10-2023-0103450, filed on August 08, 2023, and Korean Patent Application No. 10-2024-0103868, filed on August 05, 2024, with the Korean Intellectual Property Office, the disclosures of which are incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, if an event occurs and a high current exceeding the allowable current flows in a battery cell, the temperature of the battery cell may rise irregularly, which may cause disassembly and explosion of the battery cell. To prevent this, the battery cell may have a so-called fusing function of blocking the high current by inducing short-circuits when a high current exceeding the allowable current flows. In existing battery cells, the current collector is equipped with a fusing portion to perform such a fusing function.

However, it is difficult to accurately position the fusing portion provided in the conventional battery cell during the manufacturing process of the current collector. As a result, it is difficult for the fusing portion to properly perform the fusing function due to a big difference in position of the fusing portion, and it is also difficult to prevent the occurrence of foreign substances during fusing and to prevent the reconnection of the current after fusing. In addition, the conventional current collector has a problem with a low allowable current of the fusing portion, which is not suitable for high-output battery cells.

Meanwhile, various experiments such as external short circuit tests may be conducted to check the safety of battery cells, especially, cylindrical battery cells. In this case, one of the important criteria is whether the battery cell explodes, and conventional battery cells restrict the supply of current by fusing through a CID method. On the other hand, recently, the current collector has employed a fusing portion, instead of the CID method, and when conducting the above experiments for safety checks, it is very important to place the fusing portion in the correct position and prevent the occurrence of foreign substances and current reconnection.

Meanwhile, the experiment for safety checks, such as the external short circuit test, is one of the important tests in the safety evaluation items of major customers as well as international certification.

### DISCLOSURE

### Technical Problem

The present disclosure is designed to solve the problems of the related art, and therefore the present disclosure is directed to providing a current collector, a battery cell, and a battery pack capable of easily and accurately adjusting the position where fusing occurs, and a vehicle including the same.

In addition, the present disclosure is also to provide a current collector, a battery cell, and a battery pack capable of effectively preventing the occurrence of foreign substances during fusing, and a vehicle including the same.

In addition, the present disclosure is also to provide a current collector, a battery cell, and a battery pack capable of preventing the reconnection of current even after fusing, and a vehicle including the same.

In addition, the present disclosure is also to provide a current collector, a battery cell, and a battery pack suitable for high output while effectively securing the fusing function, and a vehicle including the same.

In addition, the present disclosure is also to provide a current collector, a battery cell, and a battery pack with improved productivity, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a current collector including: a first coupling portion coupled with a first terminal; a second coupling portion coupled with an electrode assembly; a plurality of bridge portions configured to connect the first coupling portion and the second coupling portion; and a plurality of fusing induction portions provided in the respective bridge portions and configured to cover at least a portion of the bridge portion.

The fusing induction portion may have an insulating performance.

The fusing induction portion may be configured as a tape wrapping around an outer surface of the bridge portion.

The fusing induction portion may be disposed at a position closer to a center of the current collector than an outer circumferential portion of the current collector.

The fusing induction portion may be disposed at a position closer to the center of the current collector, based on a middle position between the outer circumferential portion of the current collector and the center of the current collector.

The fusing induction portion may be disposed at an end of the bridge portion on a side of the first coupling portion.

The bridge portion may be configured such that its width in a direction substantially perpendicular to a direction toward the first coupling portion is formed to be constant in the direction toward the first coupling portion.

The bridge portion may be configured such that its cross-sectional area based on a direction toward the first coupling portion is formed to be constant in the direction toward the first coupling portion.

The fusing induction portion may include: a first fusing induction portion disposed at a position relatively close to the first coupling portion; and a second fusing induction portion disposed at a position relatively far from the first coupling portion, and a thickness of the first fusing induction portion may be configured to be greater than a thickness of the second fusing induction portion.

The fusing induction portion may include: a first fusing induction portion disposed at a position relatively close to the first coupling portion; and a second fusing induction portion disposed at a position relatively far from the first coupling portion, and the first fusing induction portion and the second fusing induction portion may be configured as a tape wrapping around an outer circumferential portion of the bridge portion, respectively, and the first fusing induction portion may be configured as a greater number of tapes wrapping around the same than the second fusing induction portion.

The fusing induction portion may include: a first fusing induction portion disposed at a position relatively close to the first coupling portion; and a second fusing induction portion disposed at a position relatively far from the first coupling portion, and the first fusing induction portion and the second fusing induction portion have an insulating performance, respectively, and the insulating performance of the first fusing induction portion may be higher than the insulating performance of the second fusing induction portion.

The current collector may include a slit configured to form the first coupling portion, the second coupling portion, and the bridge portion, and the fusing induction portion may be provided on at least one of both sides of the current collector.

A battery cell according to the present disclosure includes a current collector according to the present disclosure.

A battery pack according to the present disclosure includes at least one battery cell according to the present disclosure.

A vehicle according to the present disclosure includes at least one battery pack according to the present disclosure.

### Advantageous Effects

According to the present disclosure, it is possible to provide a current collector, a battery cell, and a battery pack capable of easily and accurately adjusting the position where fusing occurs, and a vehicle including the same.

In addition, it is possible to provide a current collector, a battery cell, and a battery pack capable of effectively preventing the occurrence of foreign substances during fusing, and a vehicle including the same.

In addition, it is possible to provide a current collector, a battery cell, and a battery pack capable of preventing the reconnection of current even after fusing, and a vehicle including the same.

In addition, it is possible to provide a current collector, a battery cell, and a battery pack suitable for high output while effectively securing the fusing function, and a vehicle including the same.

In addition, it is possible to provide a current collector, a battery cell, and a battery pack with improved productivity, and a vehicle including the same.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view illustrating a battery cell according to an embodiment of the present disclosure.
FIG. 2 is a cross-sectional perspective view illustrating the internal structure of a battery cell according to an embodiment of the present disclosure.
FIG. 3 is a perspective view illustrating a current collector according to an embodiment of the present disclosure.
FIG. 4 is a plan view illustrating a current collector according to an embodiment of the present disclosure.
FIG. 5 is a perspective view illustrating a current collector according to a modified example of an embodiment of the present disclosure.
FIG. 6 is a plan view illustrating a first width and a second width in a current collector according to an embodiment of the present disclosure.
FIG. 7 is a drawing illustrating a first cross-sectional area and a second cross-sectional area in a current collector according to an embodiment of the present disclosure.
FIG. 8 is a cross-sectional perspective view illustrating a part of a current collector, which is cut and enlarged, according to another embodiment of the present disclosure.
FIG. 9 is a cross-sectional perspective view illustrating a part of a current collector, which is cut and enlarged, according to a modified example of another embodiment of the present disclosure.
FIG. 10 is a cross-sectional perspective view illustrating a part of a current collector, which is cut and enlarged, according to another modified example of another embodiment of the present disclosure.
FIG. 11 is a cross-sectional perspective view illustrating a part of a current collector, which is cut and enlarged, according to another embodiment of the present disclosure.
FIG. 12 is a perspective view illustrating a battery pack according to an embodiment of the present disclosure.
FIG. 13 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

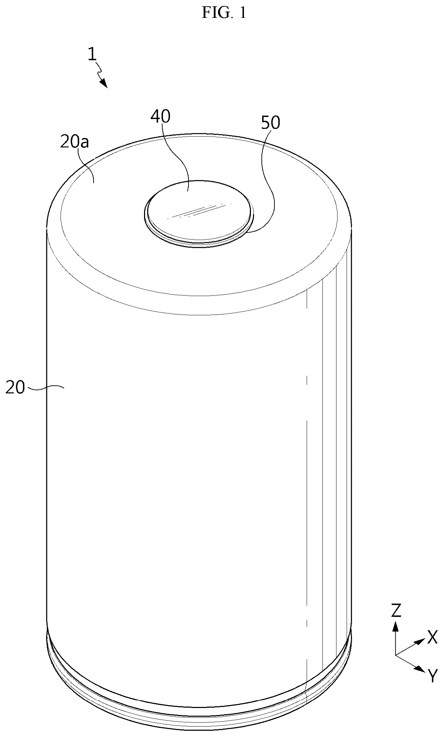

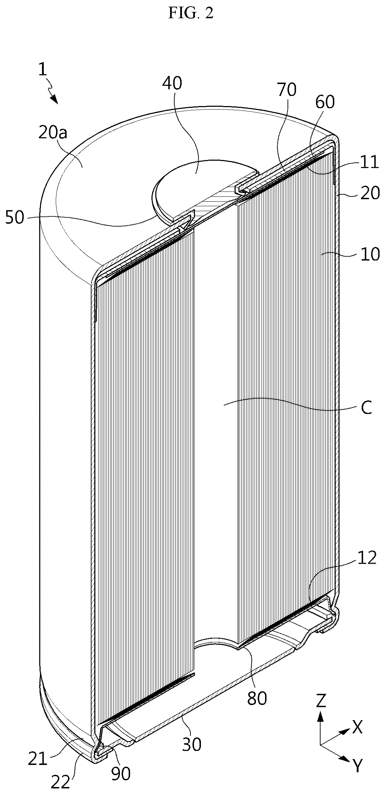

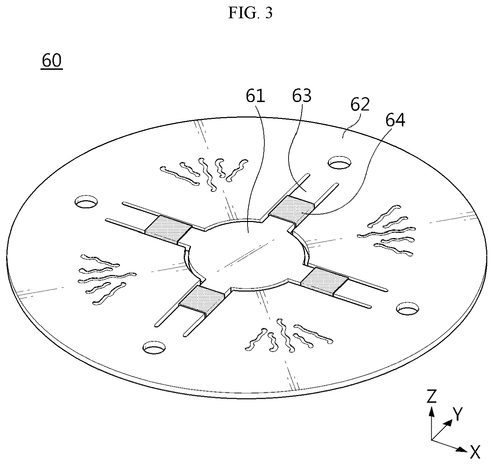

FIG. 1 is a perspective view illustrating a battery cell according to an embodiment of the present disclosure, FIG. 2 is a cross-sectional perspective view illustrating the internal structure of a battery cell according to an embodiment of the present disclosure, and FIG. 3 is a perspective view illustrating a current collector according to an embodiment of the present disclosure.

Hereinafter, a current collector 60 according to an embodiment of the present disclosure will be described in detail with reference to FIGS. 1 to 3. The current collector 60 according to an embodiment of the present disclosure may include a first coupling portion 61, a second coupling portion 62, a bridge portion 63, and a fusing induction portion 64.

The first coupling portion 61 may be coupled to a first terminal 40. The first coupling portion 61 may be electrically connected to the first terminal 40. The first terminal 40 may have a first polarity. The first terminal 40 will be described in more detail later.

The second coupling portion 62 may be coupled to an electrode assembly 10. The second coupling portion 62 may be electrically connected to the electrode assembly 10. The electrode assembly 10 will be described in more detail later.

The bridge portion 63 may connect the first coupling portion 61 and the second coupling portion 62. The bridge portion 63 may electrically connect the first coupling portion 61 and the second coupling portion 62. The bridge portion 63 may be formed integrally with the first coupling portion 61 and the second coupling portion 62. The bridge portion 63 may be disposed between the first coupling portion 61 and the second coupling portion 62. In the current collector 60, the first coupling portion 61 may be disposed relatively in the inner center, and the second coupling portion 62 may be disposed on the outer side of the first coupling portion 61.

A plurality of bridge portions 63 may be provided. For example, as shown in the drawing, four bridge portions 63 may be provided in one current collector 60. However, unlike what is shown in the drawing, two, three, or five or more bridge portions 63 may be provided in one current collector 60.

The fusing induction portion 64 may cover at least a portion of the bridge portion 63. The fusing induction portion 64 may wrap around at least a portion of the bridge portion 63. The fusing induction portion 64 may be provided for each of the plurality of bridge portions 63. That is, the fusing induction portion 64 may be provided to correspond to each bridge portion 63.

The fusing induction portion 64 may prevent heat generated due to high current in the portion of the bridge portion 63 wrapped around and covered by the fusing induction portion 64 from dissipating to the outside. Therefore, when a high current is generated in the bridge portion 63, the portion of the bridge portion 63 covered by the fusing induction portion 64 may be induced to fuse.

In the case of the fusing portion having a fusing function provided in the conventional current collector of the battery cell, it is difficult to accurately position the fusing portion during the manufacturing process of the current collector. As a result, it is difficult for the fusing portion to properly perform the fusing function due to a big difference in position of the fusing portion, and it is also difficult to prevent the occurrence of foreign substances during fusing and to prevent the reconnection of the current after fusing. In addition, the conventional current collector has a problem with a low allowable current of the fusing portion, which is not suitable for high-output battery cells.

However, the current collector 60 according to the present disclosure may easily and accurately adjust the position where fusing occurs by the above-mentioned configuration. As a result, the current collector 60 according to the present disclosure may effectively prevent the occurrence of foreign substances during fusing, and may effectively prevent the reconnection of current after fusing. In addition, since the current collector 60 according to the present disclosure includes a plurality of bridge portions 63 and a plurality of fusing induction portions 64 provided in the respective bridge portions 63, the current path between the first coupling portion 61 and the second coupling portion 62 may be extended, and at the same time, the allowable current of the fusing induction portion 64 may be increased. Accordingly, the current collector 60 according to the present disclosure has an advantage of being suitable for high output while effectively securing the fusing function.

The fusing induction portion 64 may have insulating performance. The fusing induction portion 64 may include an insulating material. In the case where the fusing induction portion 64 includes an insulating material, the fusing induction portion 64 may more effectively prevent heat generated in the bridge portion 63 from dissipating to the outside, so that fusing may be more effectively induced in the fusing induction portion 64.

The fusing induction portion 64 may be provided in the form of a tape. The fusing induction portion 64 may be provided as a tape having insulating performance. The fusing induction portion 64 may be provided as a tape including an insulating material. In the case where the fusing induction portion 64 is provided as a tape, the fusing induction portion 64 may be easily attached to the accurate position of the bridge portion 63. In addition, there is an advantage in which the width or thickness of the fusing induction portion 64 may be easily changed, and in some cases, tapes of various shapes or materials may be applied to the fusing induction portion 64, and the fusing induction portion 64 may be easily removed or changed.

Meanwhile, in the case where the fusing induction portion 64 is provided as a tape, it may be attached to the bridge portion 63 so as to wrap around the entire outer surface of the bridge portion 63, or alternatively, it may be attached to only a portion of the outer surface of the bridge portion 63.

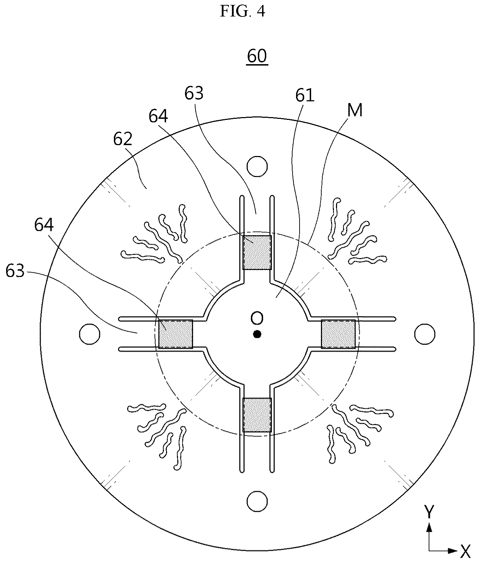

FIG. 4 is a plan view illustrating a current collector according to an embodiment of the present disclosure.

Hereinafter, a current collector 60 according to an embodiment of the present disclosure will be described in more detail with reference to FIG. 4.

The fusing induction portion 64 may be disposed at a position closer to the center O of the current collector 60 than the outer circumferential portion of the current collector 60. Here, the center O of the current collector 60 may be understood as the center of gravity of the current collector 60 when the current collector 60 is viewed from above or in the Z-axis direction. In addition, the position of the fusing induction portion 64 may be understood as the center of gravity of the fusing induction portion 64 when the current collector 60 is viewed from above or in the Z-axis direction.

When a high current flows through the current collector 60, the center O of the current collector 60 located closer to the core C of the electrode assembly 10, which will be described below, or the first coupling portion 61 may heat up more quickly than the outer circumferential portion of the current collector 60. Therefore, as described above, if the fusing induction portion 64 is disposed at a position closer to the center O of the current collector 60 than the outer circumferential portion of the current collector 60, the time until the fusing function is exerted in the current collector 60 may be shortened, so that the fusing function of the current collector 60 may be performed more effectively.

The fusing induction portion 64 may be disposed at a position closer to the center O of the current collector 60, based on the middle position between the outer circumference of the current collector 60 and the center O of the current collector 60. Here, the middle position indicates a position corresponding to the middle line M, and the middle line M may be understood as a line connecting the middle points between the center O of the current collector 60 and the outer circumference of the current collector 60 along the circumferential direction.

That is, the fusing induction portion 64 may be disposed inward from the middle line M so as to be closer to the center O of the current collector 60. In the case where the fusing induction portion 64 is disposed as described above, the fusing induction portion 64 may be surely disposed closer to the center O of the current collector 60 than the outer circumferential portion of the current collector 60, thereby further improving the fusing function of the current collector 60.

Meanwhile, at least a portion of the fusing induction portion 64 may be disposed inside the core C to be described below. Specifically, when viewed in the up-down direction or Z-axis direction, at least a portion of the fusing induction portion 64 may be disposed inside the core C described below. In this case, the size of the first coupling portion 61 may be configured to be smaller than the size of the cross-section of the core C. For example, the core C may have a cross-section that roughly corresponds to the middle line M shown in FIG. 4. If the current collector 60 is configured as described above, even if the bridge portion 63 is cut due to fusing occurring in the fusing induction portion 64, the cut portions or fragments of the bridge portion 63 may be guided to the empty space of the core C, instead of reaching the electrode assembly 10, thereby effectively preventing a short circuit due to fusing.

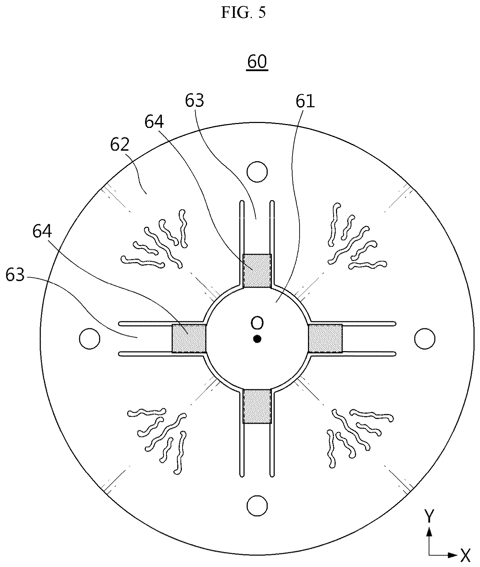

FIG. 5 is a perspective view illustrating a current collector according to a modified example of an embodiment of the present disclosure.

Hereinafter, a current collector 60 according to a modified example of an embodiment of the present disclosure will be described in detail with reference to FIG. 5. A fusing induction portion 64 of the current collector 60 according to a modified example of the present disclosure may be disposed at an end of the bridge portion 63 on the side of the first coupling portion 61. In this case, the fusing induction portion 64 may be disposed closest to the first coupling portion 61.

If the fusing induction portion 64 is disposed as described above, the fusing induction portion 64 may be disposed closest to the center O of the current collector 60, thereby maximizing the fusing function of the current collector 60.

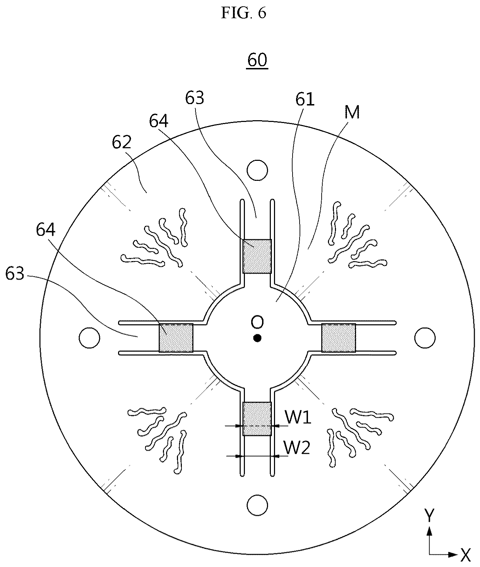

FIG. 6 is a plan view illustrating a first width and a second width in a current collector according to an embodiment of the present disclosure.

Hereinafter, a current collector 60 according to an embodiment of the present disclosure will be described in more detail with reference to FIG. 6. The width of the bridge portion 63 of the current collector 60 may be formed to be constant along the direction toward the first coupling portion 61. The bridge portion 63 of the current collector 60 may have a constant width in a portion where the fusing induction portion 64 is disposed and a constant width in a portion where the fusing induction portion 64 is not disposed.

Specifically, the width of the bridge portion 63 may be a width in a direction that is approximately perpendicular to the direction toward the first coupling portion 61. For example, the width of the bridge portion 63 may be a width in the direction toward the second coupling portions 62 on both sides, as shown in FIG. 6. The bridge portion 63 may have a first width W1 in a portion where the fusing induction portion 64 is disposed. The first width W1 may be the width of a portion of the bridge portion 63, which is covered by the fusing induction portion 64, other than the width including the fusing induction portion 64. The bridge portion 63 may have a second width W2 in a portion where the fusing induction portion 64 is not disposed. The first width W1 and the second width W2 may be the same.

Meanwhile, for example, the bridge portion 63 may have a predetermined thickness in the Z direction, and the width of the bridge portion 63 may be understood as a width in the thickness direction, unlike what is shown in FIG. 6. In this case, the first width W1 may be the thickness of a portion of the bridge portion 63 where the fusing induction portion 64 is disposed, and the second width W2 may be understood as the thickness of a portion of the bridge portion 63 where the fusing induction portion 64 is not disposed.

As described above, if the width of the bridge portion 63 is formed constant in the direction toward the first coupling portion 61, such as when the first width W1 and the second width W2 of the bridge portion 63 are formed to be the same, the width of the bridge portion 63 is not reduced, so that the current pass of the bridge portion 63 may be effectively secured. As a result, the current collector 60 may be suitable for high output while effectively securing the fusing function.

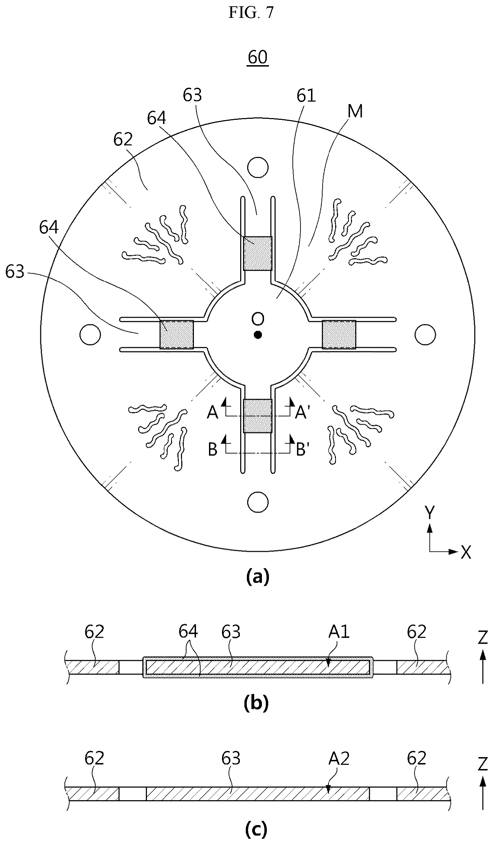

FIG. 7 is a drawing illustrating a first cross-sectional area and a second cross-sectional area in a current collector according to an embodiment of the present disclosure.

Hereinafter, the current collector 60 according to an embodiment of the present disclosure will be described in more detail with reference to FIG. 7. In the current collector 60, the cross-sectional area of the bridge portion 63 may be configured to be constant in the direction toward the first coupling portion 61. The bridge portion 63 of the current collector 60 may have a constant cross-sectional area in the portion where the fusing induction portion 64 is disposed and in the portion where the fusing induction portion 64 is not disposed.

Specifically, the cross-section of the bridge portion 63 may be understood as a cross-section based on the direction from the bridge portion 63 toward the first coupling portion 61. The bridge portion 63 may have a first cross-sectional area A1 in the portion where the fusing induction portion 64 is disposed. The first cross-sectional area A1 may be a cross-sectional area of a portion of the bridge portion 63 covered by the fusing induction portion 64, excluding the fusing induction portion 64. The bridge portion 63 may have a second cross-sectional area A2 in the portion where the fusing induction portion 64 is not disposed. The first cross-sectional area A1 and the second cross-sectional area A2 may be the same.

As described above, if the cross-sectional area of the bridge portion 63 is configured to be constant in the direction toward the first coupling portion 61, such as when the first cross-sectional area A 1 and the second cross-sectional area A2 of the bridge portion 63 are the same, the cross-sectional area of the current pass of the bridge portion 63 is not reduced, so that the current pass of the bridge portion 63 may be effectively secured. As a result, the current collector 60 may be suitable for high output while effectively securing the fusing function.

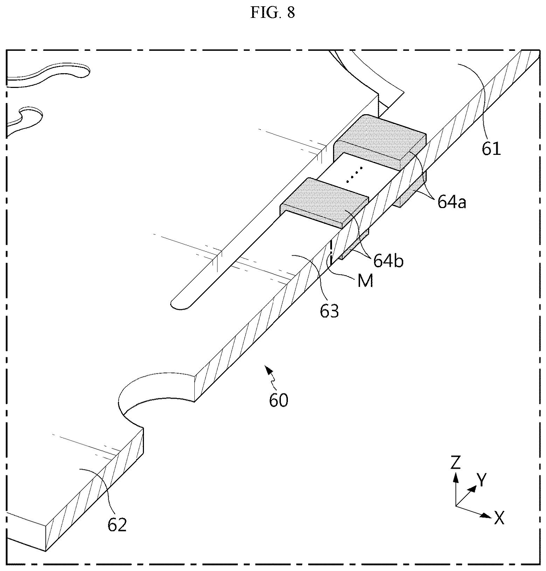

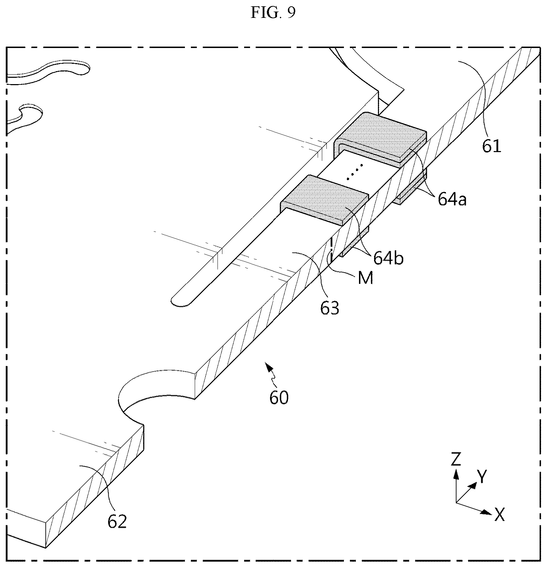

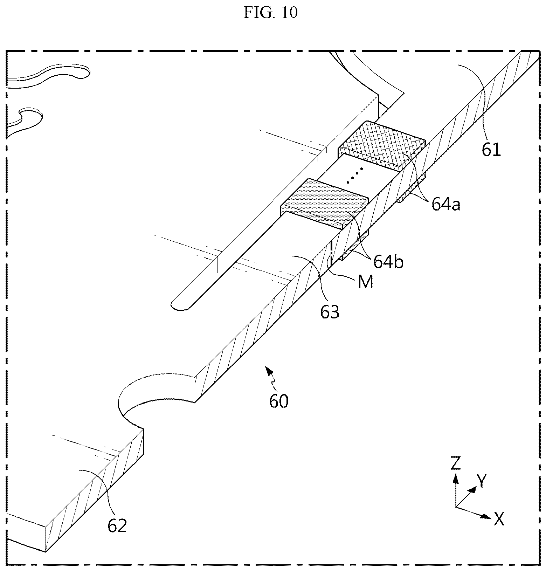

FIG. 8 is a cross-sectional perspective view illustrating a part of a current collector, which is cut and enlarged, according to another embodiment of the present disclosure, FIG. 9 is a cross-sectional perspective view illustrating a part of a current collector, which is cut and enlarged, according to a modified example of another embodiment of the present disclosure, and FIG. 10 is a cross-sectional perspective view illustrating a part of a current collector, which is cut and enlarged, according to another modified example of another embodiment of the present disclosure.

Hereinafter, a current collector 60 according to another embodiment of the present disclosure will be described in detail with reference to FIGS. 8 to 10. In the current collector 60 according to another embodiment of the present disclosure, a fusing induction portion 64 may include a first fusing induction portion 64a and a second fusing induction portion 64b.

The first fusing induction portion 64a may be configured to be disposed at a position relatively close to the first coupling portion 61. The second fusing induction portion 64b may be configured to be disposed at a position relatively far from the first coupling portion 61. That is, if a plurality of fusing induction portions 64 are provided, the first fusing induction portion 64a may be configured to be disposed further inward so as to be close to the first coupling portion 61 of the current collector 60, and the second fusing induction portion 64b may be configured to be disposed further outward so as to be far from the second coupling portion 62 of the current collector 60.

Meanwhile, the fusing induction portion 64 may further include at least one fusing induction portion between the first fusing induction portion 64a and the second fusing induction portion 64b.

In particular, referring to FIG. 8, in the current collector 60 according to another embodiment of the present disclosure, the thickness of the first fusing induction portion 64a may be configured to be greater than the thickness of the second fusing induction portion 64b. That is, in the bridge portion 63, the thickness of the fusing induction portion 64 may increase as it is closer to the center O of the current collector 60 or the first coupling portion 61.

In the case where the fusing induction portion 64 is configured as described above, the thickness of the fusing induction portion 64 gradually increases as it is closer to the center O of the current collector 60, which heats up more quickly, thereby preventing heat dissipation more effectively. As a result, the time until the fusing function is exerted in the current collector 60 may be further shortened, and the fusing function of the current collector 60 may be performed more effectively.

In particular, referring to FIG. 9, in the current collector 60 according to a modified example of another embodiment of the present disclosure, the first fusing induction portion 64a and the second fusing induction portion 64b may be configured in the form of a tape that wraps around the outer surface of the bridge portion 63, respectively. In addition, the first fusing induction portion 64a may be configured as a greater number of tapes wrapping around the same than the second fusing induction portion 64b. That is, in the bridge portion 63, the fusing induction portion 64 may be configured as a greater number of tapes wrapping around the same as it is closer to the center O of the current collector 60 or the first coupling portion 61.

In the case where the fusing induction portion 64 is configured as described above, since the fusing induction portion 64 is configured as a greater number of wrapping tapes as it is closer to the center O of the current collector 60, which heats up more quickly, heat dissipation may be prevented more effectively. As a result, the time until the fusing function of the current collector 60 is exerted may be further shortened, and the fusing function of the current collector 60 may be performed more effectively.

In particular, referring to FIG. 10, in the current collector 60 according to another modified example of another embodiment of the present disclosure, the first fusing induction portion 64a and the second fusing induction portion 64b may each have an insulating performance. In addition, the insulating performance of the first fusing induction portion 64a may be higher than that of the second fusing induction portion 64b. Specifically, the first fusing induction portion 64a and the second fusing induction portion 64b may each include an insulating material having an insulating property so that the first fusing induction portion 64a includes a larger amount of insulating material than that of the second fusing induction portion 64b, or such that the insulating material of the first fusing induction portion 64a has an insulating property higher than that of the second fusing induction portion 64b. Accordingly, in the bridge portion 63, the fusing induction portion 64 may have higher insulating performance as it is closer to the center O of the current collector 60 or the first coupling portion 61.

If the fusing induction portion 64 is configured as described above, the insulating performance of the fusing induction portion 64 may be strengthened toward the center O of the current collector 60, which heats up more quickly, so that the effect of preventing heat dissipation may increase. As a result, the time until the fusing function of the current collector 60 is exerted may be further shortened, and the fusing function of the current collector 60 may be performed more effectively.

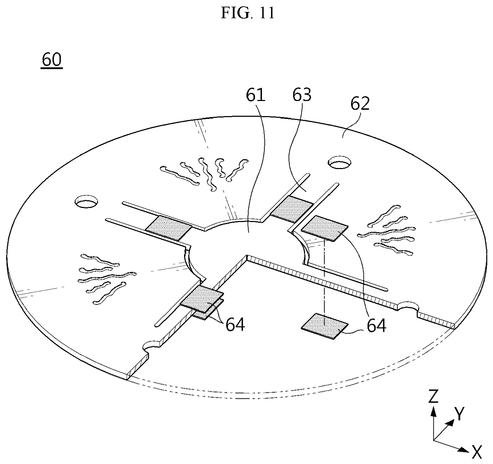

FIG. 11 is a cross-sectional perspective view illustrating a part of a current collector, which is cut and enlarged, according to another embodiment of the present disclosure.

Hereinafter, a current collector 60 according to another embodiment of the present disclosure will be described in detail with reference to FIG. 11. According to another embodiment of the present disclosure, the current collector 60 may have a slit. Specifically, the current collector 60 may have slits to form a first coupling portion 61, a second coupling portion 62, and a bridge portion 63. Here, the slit may be understood as a narrow gap formed between the first coupling portion 61 and the second coupling portion 62 in the current collector 60 to separate them from each other, and a narrow gap formed between the bridge portion 63 and the second coupling portion 62 to separate them from each other (see FIG. 11). This slit may be formed as a cutting line or an incision line.

If the current collector 60 is provided as described above, the current collector 60 may be roughly manufactured by only processing slits such as cutting lines or incision lines on a plate member, so that the productivity of the current collector 60 may be improved. In addition, since the gap between any two of the first coupling portion 61, the second coupling portion 62, and the bridge portion 63 may be minimized by the slits, the current pass of the current collector 60 may be improved.

In another embodiment of the present disclosure, the current collector 60 may have a fusing induction portion 64 provided on at least one of both sides of the current collector 60. Here, one side of the current collector 60 may face the electrode assembly 10, and the other side may face the first terminal 40. For example, the bottom surface or the - Z-sided surface of the current collector 60 may face the electrode assembly 10, and the top surface or the +Z-sided surface of the current collector 60 may face the first terminal 40.

The fusing induction portion 64 may be provided on at least one of the bottom and top surfaces of the bridge portion 63. Meanwhile, in the current collector 60 according to another embodiment of the present disclosure, a gap may be formed between the bridge portion 63 and the second coupling portion 62 by slitting, and the fusing induction portion 64 may not be disposed on the gap side.

In the case where the fusing induction portion 64 is provided as described above, there is an advantage in which the fusing induction portion 64 is able to be easily and accurately disposed on the bridge portion 63 even if the gap formed between the bridge portion 63 and the second coupling portion 62 by slitting is narrow.

In the above, preferred examples of the current collector 60 according to the present disclosure have been described. The technical idea of the present disclosure is not limited to these examples, and may encompass a combination of any two or more of them.

Referring back to FIGS. 1 and 2, the battery cell 1 according to the present disclosure will be described in detail.

The battery cell 1 according to the present disclosure may include the current collector 60 according to the present disclosure.

The battery cell 1 according to the present disclosure may include an electrode assembly 10, a cell housing 20, and a first terminal 40.

The electrode assembly 10 may be provided by winding a first electrode, a second electrode, and a separator interposed therebetween around the center O axis of the core C. The first electrode may be an electrode having a first polarity, and the first polarity may be one of either a positive electrode or a negative electrode. The second electrode may be an electrode having a second polarity, and the second polarity may be a negative electrode or a positive electrode, which is the opposite polarity of the first polarity. For example, the first polarity may be a positive electrode, and the second polarity may be a negative electrode. The separator may be an insulator interposed between the first electrode and the second electrode.

The electrode assembly 10 may have a jelly-roll structure. That is, the electrode assembly 10 may be manufactured by winding a laminate formed by laminating a first electrode and a second electrode in the form of a sheet at least once with a separator interposed therebetween around the core C. Any jelly-roll structure known in the art may be applied to the present disclosure without limitation.

The cell housing 20 may be configured to accommodate the electrode assembly 10. The cell housing 20 may be provided in a cylindrical shape having an inner space to accommodate, for example, the electrode assembly 10.

The first terminal 40 may be disposed on one side of the cell housing 20. The first terminal 40 may be electrically connected to the first electrode of the electrode assembly 10. At least a portion of the first terminal 40 may be exposed to the outside. The first terminal 40 may be configured in the form of a rivet. The first terminal 40, as described above, may be coupled to the first coupling portion 61 of the current collector 60 and may be electrically connected to the first coupling portion 61.

The electrode assembly 10, as described above, may be coupled to the second coupling portion 62 of the current collector 60. Specifically, the first electrode of the electrode assembly 10 may have a first uncoated portion 11, and the first uncoated portion 11 and the second coupling portion 62 may be coupled so as to be electrically connected to each other. Accordingly, the current collector 60 may electrically connect the first terminal 40 and the electrode assembly 10 to each other. The current collector 60 may be a positive electrode current collector.

A second current collector 80 may be disposed on the other side of the cell housing 20. The second current collector 80 may be configured to be electrically connected to the second electrode of the electrode assembly 10, and specifically, the second electrode may have a second uncoated portion 12, and the second uncoated portion 12 and the second current collector 80 may be coupled so as to be electrically connected to each other. If the current collector 60 described above is called a first current collector 60, the current collector 80 disposed on the other side of the cell housing 20 is defined as a second current collector 80. The second current collector 80 may be a negative electrode current collector.

The cell housing 20 may constitute a second terminal. The second terminal may be electrically connected to the second electrode of the electrode assembly 10. The second terminal may be electrically connected to the second current collector 80. An outer surface 20a may be provided on one side of the cell housing 20. That is, both the first terminal 40 and the second terminal may be provided on one side of the cell housing 20. An insulating gasket 50 may be disposed between the first terminal 40 and the outer surface 20a. An insulator 70 may be disposed between the current collector 60 and the outer surface 20a and/or between the current collector 60 and the cell housing 20.

A beading portion 21 and a crimping portion 22 may be provided on the other side of the cell housing 20. The beading portion 21 may be formed by an outer circumferential surface of the cell housing 20 being recessed and may fix the electrode assembly 10. The beading portion 21 may support components such as a cap 30. The crimping portion 22 may seal the other side of the cell housing 20. A sealing gasket 90 may be disposed between the crimping portion 22 and the cap 30.

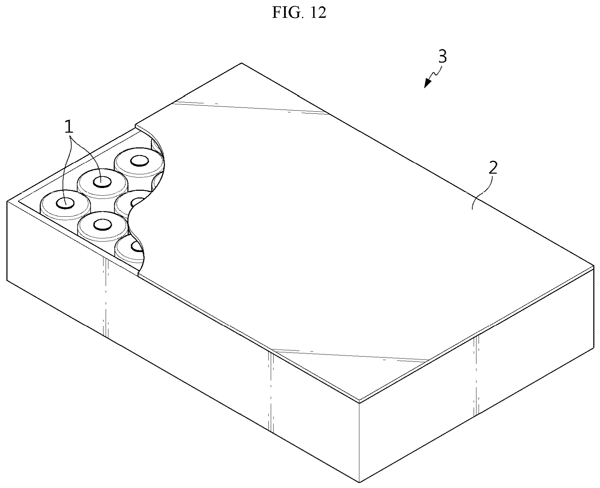

FIG. 12 is a perspective view illustrating a battery pack according to an embodiment of the present disclosure.

Referring to FIG. 12, the battery pack 3 according to the present disclosure may include at least one battery cell 1 according to the present disclosure. The battery pack 3 may include a pack case 2 that accommodates at least one battery cell 1.

Components such as a bus-bar for electrical connection of the battery cells 1, a cooling unit, an external terminal, and the like are omitted from the drawing for the convenience. The structure of a plurality of battery cells 1 for manufacturing the battery pack 3 has been described above as an example.

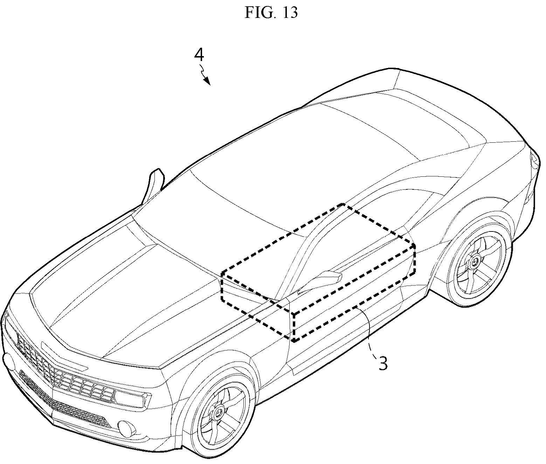

FIG. 13 is a drawing illustrating a vehicle according to an embodiment of the present disclosure.

Referring to FIG. 13, the battery pack 3 according to an embodiment of the present disclosure may be applied to a vehicle 4 such as an electric vehicle or a hybrid vehicle. That is, the vehicle 4 according to the present disclosure may include the battery pack 3 according to the present disclosure. The battery pack 3 may be installed in a car body frame under a vehicle seat or in a trunk space. In addition, the vehicle 4 according to the present disclosure may further include various other components included in the vehicle 4, in addition to the battery pack 3. For example, the vehicle 4 according to an embodiment of the present disclosure may further include a car body, a motor, a control device such as an ECU (electronic control unit), or the like, in addition to the battery pack 3 according to the present disclosure.

In addition, it is obvious that the battery pack 3 according to the present disclosure may also be applied to other devices, apparatuses, and facilities such as an energy storage system using a secondary battery, in addition to the vehicle 4.

Meanwhile, although terms indicating directions such as up, down, left, right, front, and back are used in this specification, it is obvious to those skilled in the art that these terms are only for convenience of explanation and may vary depending on the position of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A current collector comprising:
a first coupling portion coupled with a first terminal;
a second coupling portion coupled with an electrode assembly;
a plurality of bridge portions configured to connect the first coupling portion and the second coupling portion; and
a plurality of fusing induction portions provided in the respective bridge portions and configured to cover at least a portion of the bridge portion.

2. The current collector according to claim 1,
wherein the fusing induction portion has an insulating performance.

3. The current collector according to claim 1,
wherein the fusing induction portion is configured as a tape wrapping around an outer surface of the bridge portion.

4. The current collector according to claim 1,
wherein the fusing induction portion is disposed at a position closer to a center of the current collector than an outer circumferential portion of the current collector.

5. The current collector according to claim 4,
wherein the fusing induction portion is disposed at a position closer to the center of the current collector, based on a middle position between the outer circumferential portion of the current collector and the center of the current collector.

6. The current collector according to claim 4,
wherein the fusing induction portion is disposed at an end of the bridge portion on a side of the first coupling portion.

7. The current collector according to claim 1,
wherein the bridge portion is configured such that its width in a direction substantially perpendicular to a direction toward the first coupling portion is formed to be constant in the direction toward the first coupling portion.

8. The current collector according to claim 1,
wherein the bridge portion is configured such that its cross-sectional area based on a direction toward the first coupling portion is formed to be constant in the direction toward the first coupling portion.

9. The current collector according to claim 1,
wherein the fusing induction portion comprises:
a first fusing induction portion disposed at a position relatively close to the first coupling portion; and
a second fusing induction portion disposed at a position relatively far from the first coupling portion, and
wherein a thickness of the first fusing induction portion is configured to be greater than a thickness of the second fusing induction portion.

10. The current collector according to claim 1,
wherein the fusing induction portion comprises:
a first fusing induction portion disposed at a position relatively close to the first coupling portion; and
a second fusing induction portion disposed at a position relatively far from the first coupling portion,
wherein the first fusing induction portion and the second fusing induction portion are configured as a tape wrapping around an outer circumferential portion of the bridge portion, respectively, and
wherein the first fusing induction portion is configured as a greater number of tapes wrapping around the same than the second fusing induction portion.

11. The current collector according to claim 1,
wherein the fusing induction portion comprises:
a first fusing induction portion disposed at a position relatively close to the first coupling portion; and
a second fusing induction portion disposed at a position relatively far from the first coupling portion,
wherein the first fusing induction portion and the second fusing induction portion have an insulating performance, respectively, and
wherein the insulating performance of the first fusing induction portion is higher than the insulating performance of the second fusing induction portion.

12. The current collector according to claim 1,
wherein the current collector comprises a slit configured to form the first coupling portion, the second coupling portion, and the bridge portion, and
wherein the fusing induction portion is provided on at least one of both sides of the current collector.

13. A battery cell comprising a current collector according to any one of claims 1 to 12.

14. A battery pack comprising at least one battery cell according to claim 13.

15. A vehicle comprising at least one battery pack according to claim 14.
